# EUROPEAN PATENT SPECIFICATION

(11) **EP 1 044 147 B1**
(45) Date of publication and mention of the grant of the patent: **26.02.2003**
(21) Application number: 98937902.9
(22) Date of filing: 11.08.1998
(51) Int. Cl.: B65G 17/06

(54) **CONVEYOR CHAIN AND ARRANGEMENT AND METHOD FOR CONNECTING THE LINKS THEREOF**
FÖRDERKETTE, ANORDNUNG UND VERFAHREN ZUM VERBINDEN DER GLIEDER
CHAINE DE TRANSPORTEUR, ET SYSTEME ET PROCEDE PERMETTANT D'EN CONNECTER LES MAILLONS

(30) Priority: 13.08.1997 SE 9702930
(43) Date of publication of application: 18.10.2000
(73) Proprietor: MOVING AB, 265 82 Astorp (SE)
(72) Inventor: JOHANSSON, Lars, Jörgen, S-252 21 Helsingborg (SE); LUNDGREN, Göran, S-313 32 Oskarsström (SE)
(74) Representative: Berglund, Gustav Arthur
(86) International application number: SE9801453
(87) International publication number: WO99011546

(56) References cited:
- EP-A1- 0 323 819
- US-A- 2 091 836

## Description

### Field of the Invention

The present invention generally relates to a conveyor chain as well as an arrangement and a method for connecting chain links included in the conveyor chain. More specifically, the present invention relates to a conveyor chain, whose links are pivotable in relation to each other about a first and a second pivot axis extended transversely of the conveyor chain, which pivot axes are mutually perpendicular, the first link supporting a coupling pin, which extends through a head portion of the second link along the first pivot axis, one of the coupling pin and the head portion having a projection with a first joint surface and the other of the coupling pin and the head portion having a seat slidingly abutting against the projection with a second joint surface complementary to the first joint surface, which joint surfaces are curved about the second pivot axis and thus form a joint which defines this second pivot axis.

### Background of the Invention

A conveyor chain of the above-mentioned type is disclosed in US-2,091,836. According to an embodiment of this prior-art conveyor chain, two links included in the conveyor chain are connected by means of a coupling pin. The coupling pin is pivotally mounted in a pair of legs of one of the links, and the coupling pin extends through a head portion of the other link. The coupling pin has a part-cylindrical projection, which abuts against a part-cylindrical seat of the head portion, whereby the projection and the seat form a joint which permits a lateral pivoting of the links in relation to each other. A vertical pivoting of the links in relation to each other is permitted by pivoting about the pivotally mounted coupling pin.

The desired pivoting between two links of the conveyor chain is thus achieved on the one hand by the joint formed by the projection and the seat and, on the other, by the rotation of the coupling pin. No additional components are required to achieve said pivoting, which, of course, results in a relatively low manufacturing cost of the conveyor chain.

There are, however, some disadvantages of this prior-art conveyor chain.

First, the links are placed in frictional contact with each other during operation, in particular as the conveyor chain turns. This friction causes noise as well as wear on the links, which in turn generates dust. To reduce this problem it is known to add a lubricant to the material of which the links are made, in most cases a plastic material, which addition reduces the tensile strength of the links. For certain types of conveyor chains, it is known, in order to solve the problem of friction between the links, to arrange a metallic sliding surface therebetween to reduce the friction. This solution reduces the noise and wear, but an additional element has to be mounted on each link of the chain, resulting in a higher manufacturing cost.

Second, the mounting of the conveyor chain is relatively complicated. When connecting two links, the links must in fact be angled relative to each other to permit the introduction of the coupling pin. This makes the mounting time-consuming and thus expensive.

### Summary of the Invention

In consideration of that stated above, one object of the present invention is to provide an improved conveyor chain as regards its construction and assembly.

Thus the invention provides an arrangement of a first and a second link articulately connected to each other for use in a conveyor chain, which links are pivotable in relation to each other about a first and a second pivot axis extended transversely of the arrangement, which pivot axes are mutually perpendicular, the first link supporting a coupling pin, which extends through a head portion of the second link along the first pivot axis, one of the coupling pin and the head portion having a projection with a first joint surface and the other of the coupling pin and the head portion having a seat slidingly abutting against the projection with a second joint surface complementary to the first joint surface, which joint surfaces are curved about the second pivot axis and thus form a joint which defines said second pivot axis, which arrangement is characterised in that the joint surfaces are curved also about the first pivot axis, whereby the joint formed by the thus double-curved joint surfaces also defines the first pivot axis, and that the coupling pin is axially fixed in relation to the first link.

The joint formed by the joint surfaces causes the coupling pin to be positioned in relation to the head portion of the second link. Moreover, the axial fixing of the coupling pin also results in the joint being positioned in relation to the first link. Thus the first and the second link are positioned in relation to each other. This makes it possible to eliminate, or at any rate substantially reduce, the generation of friction and the problems related to this.

According to a preferred embodiment of the invention, the generation of friction is eliminated by a play between the links, which prevents wear and which can be maintained by said axial fixing of the coupling pin when the links pivot relative to each other about the second pivot axis. Thus the noise, the wear and the dust generated by the friction of the links against each other are eliminated or reduced. It is to be noted that this is achieved without any additional elements being mounted on the link.

According to another preferred embodiment of the invention, the coupling pin supported by the first link and extending through the head portion of the second link is displaceable in relation to said head portion in a direction away from the second link to a position, in which the joint surface of the projection and the joint surface of the seat are in contact with each other, the coupling pin being axially and non-rotatably fixed in the first link in said position. By reason of this, such a simple connecting of the links is achieved that the connecting operation can be automated, which, of course, permits a cost-effective production of conveyor chains.

Preferably, said coupling pin is displaceable by stretching the arrangement.

Preferably, the projection is arranged on the coupling pin and the seat is arranged in the head portion. Further, it is advantageous if the projection is integral with the coupling pin, the seat being integral with the head portion.

Preferably, the projection is made of a material having greater hardness than the seat. According to a preferred embodiment, the projection is made of a metallic material, whereas the seat is made of a polymer material.

According to yet another embodiment of the present invention, the coupling pin extends through long holes, which are made in the head portion. These long holes on the one hand permit pivoting of the links in relation to each other about the first of said pivot axes and, on the other, permit displacement of the links in relation to each other in the longitudinal direction of the arrangement. As a result, it is possible to bring the seat and the projection into contact with each other by stretching the chain to provide said articulate function. In addition, it is possible to compress the chain in its longitudinal direction, i.e. it is contractible. This can be an advantage when the chain is to be introduced into a return path, the contractility making it possible to reduce the "slack" of the chain which otherwise can form at the entry of the return path.

Additional preferred features of the inventive arrangement are stated in the claims dependent on claim 1.

Moreover, according to the invention a conveyor chain is provided which is characterised in arrangements according to the invention.

It is thus possible to provide a conveyor chain which is cheap to manufacture since only one element - a coupling pin - is required for the connecting of the links of the conveyor chain, the connecting also being easy to carry out.

Moreover, it is possible to eliminate the friction and the problems related to this since the joint formed by the coupling pin and the head portion in combination with a play for instance between the links can prevent any contact between certain parts of the links.

Finally, according to the invention a method for connecting a first and a second link of a arrangement according to the invention is provided, which method comprises the step of placing the coupling pin of the first link in the head portion of the second link, which method is characterised by the steps of arranging the head portion of the second link between a pair of legs of the first link, subsequently introducing the coupling pin into recesses in the pair of legs and into recesses in the head portion, and finally displacing the links away from each other to axially and non-rotatably fix the coupling pin in the first link and to bring said joint surfaces together to form said joint.

The inventive method permits the mounting of a conveyor chain of the type stated above and having the above-mentioned advantages.

Other preferred embodiments of the invention are stated in the dependent claims.

In the following, the invention will be described by way of example with reference to the accompanying drawings.

### Summary of the Drawings

Fig. 1 is a plan view of a link constructed according to the present invention.

Fig. 2 is a side view of the link in Fig. 1.

Fig. 3 is a plan view of a coupling pin, which is constructed according to the present invention.

Fig. 4 is an end view of the coupling pin in Fig. 3.

Fig. 5 is a plan view of two links according to Fig. 1, which are connected with a coupling pin according to Fig. 3.

Fig. 6 is a side view of the connected links in Fig. 5.

Fig. 7 is a side view of the connected links in Fig. 5 in a pivoted condition.

Fig. 8 is a cross-sectional view along the line I-I in Fig. 6.

Fig. 9 is a cross-sectional view along the line II-II in Fig. 6.

### Description of Embodiments

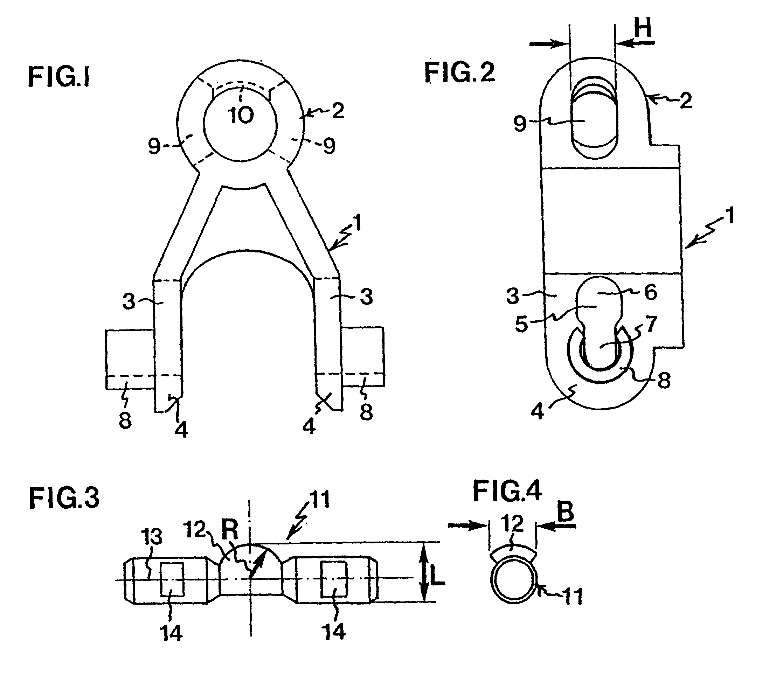

With reference to Figs 1 and 2, an embodiment is shown of a link 1 according to the present invention. The link 1 has a head portion 2 and a pair of legs 3, which extends in the direction away from the head portion 2 and whose free ends 4 are spaced from each other. In the free end 4 of each leg 3, a "keyhole" 5 is made, which keyholes 5 extend in the longitudinal direction of the link 1. Each keyhole 5 is formed of a big recess 6 and a small recess 7. Each of the small recesses 7 is partially surrounded by a locking means in the form of an open cylindrical part 8. Further, two long holes 9 are made on each side of the head portion 2, which long holes 9 extend in the longitudinal direction of the link 1. Moreover, the head portion 2 is hollow and has an internal, part-spherical seat made in its front end, which is apparent from the dashed line at 10 and from Fig. 9. In this description, part-spherical means a shape constituting a part of a sphere.

Common to all the figures of the link 1 is that a supporting surface arranged thereon is omitted to clarify the description of the invention. In the practical use of the conveyor chain according to the present invention, each link is, however, normally provided with such a supporting surface.

The link 1 is preferably made of a polymer material.

Fig. 3 shows a coupling pin 11. The coupling pin 11 is substantially cylindrical, but has a central, part-spherical projection 12. The centre of the part-spherical projection 12 coincides with the longitudinal axis 13 of the coupling pin 11. As shown in Fig. 4, the projection 12 has a radius R and a width B. In this embodiment, the radius R is greater than the radius of the pin 11, which makes the projection 12 protrude from the pin 11 and form a maximum dimension L of the coupling pin 11a transversely of its longitudinal direction. The width B of the projection 12 is equal to or smaller than the diameter of the pin 11 and forms a minimum dimension of the coupling pin 11a, which minimum dimension equals the diameter of the coupling pin 11a. The diameter of the coupling pin 11a substantially equals the height H of the long holes 9 in Fig. 2. Moreover, a groove 14 is made at each end portion of the coupling pin 11.

To attach the coupling pin 11 to the link 1, the pin 11 is introduced into one of the big recesses 6 and then out of the other big recess 6. The two grooves 14 are so arranged that they will be placed at a keyhole 5 each. In a subsequent parallel displacement of the coupling pin 11 away from the head portion 2, the grooves 14 permit the coupling pin 11 to be introduced into the small recesses 7 at the same time as it snaps into the open cylindrical parts 8, which lock the coupling pin 11, so that it cannot be displaced in the direction of the head portion 2. The grooves 14 prevent the coupling pin 11 from axial displacement and rotation about its longitudinal axis.

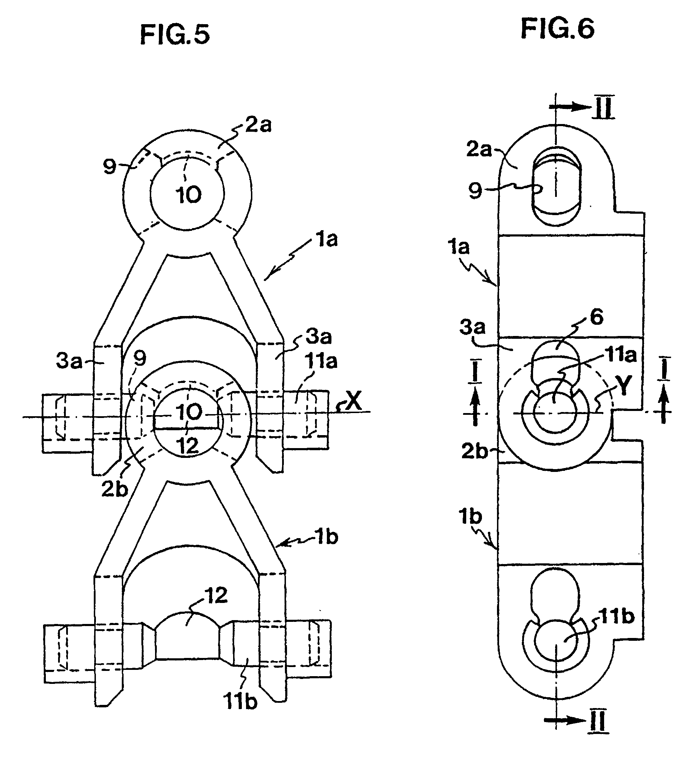

Figs 5-7 show a first link 1a and a second link 1b, which are identical with the one shown in Fig. 1 and connected by means of a coupling pin 11a according to Fig. 3. The coupling pin 11a extends right through the head portion 2b via the long holes 9. The projection 12 and the seat 10 are in contact with one another.

To connect the links 1a, 1b the head portion 2b is placed between the pair of legs 3a. Then the coupling pin 11a is introduced into one of the big recesses 6 and then into one of the long holes 9. The coupling pin 11a must be turned such that it can be passed through the long hole, i.e. so that the projection 12 extends along the long hole. The coupling pin 11a is subsequently passed through the other long hole 9 and finally out of the other big recess 6. After this, the coupling pin 11a is attached to the pair of legs 3a according to the description above.

Now the links 1a and 1b are connected. The long holes 9 permit relative displacement of the links 1a and 1b to a degree corresponding to the extent of the long holes 9.

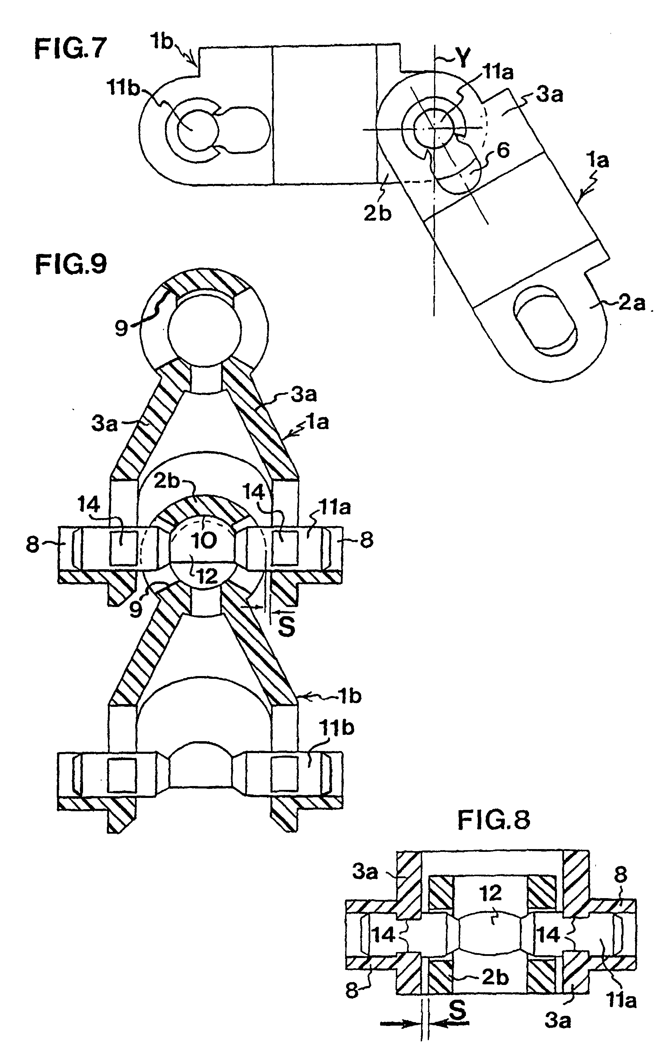

By applying tensile stress to the chain, i.e. by stretching the chain, the links 1a and 1b are moved away from each other. As a result, the projection 12 and the seat 10 are brought into contact with each other. In this contact, the head portion 2b and the coupling pin 11a are positioned in relation to each other since the joint formed by the projection 12 and the seat 10 functions as a guiding means. Since the seat 10 and the projection 12 are centred on the head portion 2b and the coupling pin 11a, respectively, the latter are also centred in relation to each other. Further, the coupling pin is axially fixed in the first link 1a, whereby the links 1a and 1b are positioned in relation to each when the conveyor chain is stretched. As long as the chain is stretched, the function of the joint will be maintained, and thus said positioning and centring will also be maintained. The joint permits the links 1a and 1b to pivot in relation to each other about two pivot axes X and Y which are mutually perpendicular and extend transversely of the conveyor chain. Fig. 7 shows the links 1a and 1b pivoted in relation to each other about the pivot axis X. It is to be noted that the positioning of the coupling pin 11a in relation to the head portion 2b is maintained when turning the chain.

In the embodiment shown, the part-spherical seat 10 forms a relatively large joint surface for the projection 12, which joint surface is shown in Fig. 9 for instance. As mentioned above, a large joint surface results in less wear on the joint, and therefore, according to the invention, it is resistant to wear and thus has a relatively long service life. Preferably, the coupling pin 11a, with its integral projection 12, is made of a metallic material, whereas the link 1b, with its head portion 2b and the seat 10 formed therein, is made of a polymer material. As a result, the friction in the joint is reduced, which implies less wear and a longer service life. It is in particular to be noted that this relatively large joint surface is achieved by means of the coupling pin 11a and the head portion 2b only. When manufacturing the links 1a and 1b, such seats 10 can be made integral with the head portions 2a and 2b, and when manufacturing the coupling pins 11a and 11b, such projections 12 can be made integral therewith. Thus no additional components are needed to form the joint, which means that the manufacturing cost of the conveyor chain can be maintained at a relatively low level at the same time as its resistance to wear will be high.

In Figs 8 and 9, it is illustrated how a coupling pin 11a is attached to a pair of legs 3a. The coupling pin 11a is snapped into the open cylindrical parts 8 so that it cannot be displaced in the longitudinal direction of the link 1a. Moreover, the grooves 14 engage in the pair of legs 3a. This results on the one hand in the pin 11a not being displaceable in the axial direction and, on the other, the pin 11a not being pivotal about its longitudinal axis. As the coupling pin 11a is axially fixed, the head portion 2b, which is positioned in relation to the coupling pin 11a when the chain is stretched, is also positioned in relation to the first link 1a. The fact that the pin cannot rotate about its longitudinal axis implies that the projection 12 cannot turn away from the seat 10.

As is evident from e.g. Fig. 9, there is a play S between the head portion 2b and the pair of legs 3a. This play S, together with the above-mentioned positioning of the head portion 2b, permits the elimination of friction. The reason for this is that the links 1a and 1b are positioned in relation to each other when the chain is stretched, the design of the joint securing that this positioning can also be maintained when the links 1a and 1b pivot in relation to each other. Thus the head portion 2b does not abut against the pair of legs 3a, which means that friction cannot be generated. As already mentioned, friction can cause much noise and wear on the links 1a and 1b. Wear in turn generates dust, which, as well as the noise, is a big work environment problem.

It is understood that the invention is not limited to the embodiment described above.

It is, of course, possible to construct the links so that the pivot axes X and Y change places, i.e. so that the coupling pin extends along the pivot axis Y. However, according to the preferred embodiment, the coupling pin extends along the pivot axis X according to the accompanying figures.

Moreover, it is understood that it is possible to form the seat in the pin and the projection in the head portion.

The appended claims are intended to cover all changes and modifications within the scope of the invention.

## Claims

1. An arrangement of a first (1a) and a second (1b) link articulately connected to each other for use in a conveyor chain,
which links (1a, 1b) are pivotable in relation to each other about a first (X) and a second (Y) pivot axis extended transversely of the arrangement, which pivot axes (X, Y) are mutually perpendicular,
the first link (1a) supporting a coupling pin (11a), which extends through a head portion (2b) of the second link (1b) along the first pivot axis (X),
one of the coupling pin (11a) and the head portion (2b) having a projection (12) with a first joint surface and
the other of the coupling pin (11a) and the head portion (2b) having a seat (10) slidingly abutting against the projection (12) with a second joint surface complementary to the first joint surface,
which joint surfaces are curved about the second pivot axis (Y) and thus form a joint which defines said second pivot axis (Y),
**characterised in**
**that** the joint surfaces are curved also about the first pivot axis (X), whereby the joint formed by the thus double-curved joint surfaces also defines the first pivot axis (X), and
**that** the coupling pin (11a) is axially fixed in relation to the first link (1a).

2. An arrangement according to claim 1, **characterised in that** the coupling pin (11a) is also non-rotatably fixed in relation to the first link (1a).

3. An arrangement according to claim 1 or 2, **characterised by** a play (S) between the links (1a, 1b) which prevents wear and which can be maintained by said axial fixing of the coupling pin (11a) when the links (1a, 1b) pivot relative to each other about the second pivot axis (Y).

4. An arrangement according to any one of the preceding claims, **characterised in that** the coupling pin (11a) supported by the first link (1a) and extending through the head portion (2b) of the second link (1b) is displaceable in relation to said head portion (2b) in a direction away from the second link (1b) to a position, in which the joint surface of the projection (12) and the joint surface of the seat (10) are in contact with each other, that the coupling pin (11a) being axially and non-rotatably fixed in the first link (1a) in said position.

5. An arrangement according to claim 4, **characterised in that** said coupling pin (11a) is displaceable by stretching the arrangement.

6. An arrangement according to claim 4 or 5, **characterised in that** the coupling pin (11a), to provide said axial and non-rotatable fixing of the coupling pin (11a) in the first link (1a) in said position, has grooves (14) extended transversely of its longitudinal direction, which grooves engage in recesses (5) made in the first link (1a).

7. An arrangement according to any one of claims 4-6, **characterised in that** the coupling pin (11a) is fixed in the first link (1a) in the longitudinal direction of the arrangement in said position.

8. An arrangement according to any one of the preceding claims, **characterised in that** the links (1a, 1b) are displaceable towards each other, whereby the joint obtains its joint function only if the arrangement is stretched.

9. An arrangement according to any one of the preceding claims, wherein the head portion (2b) is provided with two long holes (9) through which the coupling pin (11a) is extended to permit said pivoting movement about the second pivot axis (Y).

10. An arrangement according to claim 9, **characterised in that** the long holes (9) permit displacement of the links (1a, 1b) in relation to each other.

11. An arrangement according to claim 9 or 10, **characterised in that** the long holes (9) have a height (H), which is substantially equal to the thickness of the coupling pin (11a).

12. An arrangement according to claim 11, **characterised in that** the projection (12) is arranged on the coupling pin (11a), and that a maximum dimension (L) of the coupling pin (11a) with the projection (12) transversely of the first pivot axis (X) exceeds the height (H) of the long holes (9), the coupling pin (11a) with the projection (12) being insertable through the long holes (9) if the coupling pin (11a) is rotated so that said maximum dimension (L) coincides with the longitudinal direction of the long holes (9).

13. An arrangement according to any one of the preceding claims, **characterised in that** the joint has a pivot centre, which coincides with the longitudinal axis of the coupling pin (11a).

14. An arrangement according to any one of the preceding claims, **characterised in that** the projection (12) is arranged on the coupling pin (11a), and that the seat (10) is arranged in the head portion (2b).

15. An arrangement according to claim 14, **characterised in that** the projection (12) has a centre, which coincides with the longitudinal axis of the coupling pin (11a).

16. An arrangement according to claim 14 or 15, **characterised in that** the projection (12) is integral with the coupling pin (11a).

17. An arrangement according to any one of claims 14-16, **characterised in that** the seat (10) is integral with the head portion (2b).

18. A conveyor chain comprising a plurality of arrangements according to claim 1,
**characterised in that** in each arrangement
the coupling pin (11a) is non-rotatably fixed in relation to the first link (1a), and
there is a play (S) between the links (1a, 1b) which prevents wear and which by said axial fixing of the coupling pin (11a) can be maintained when the links (1a, 1b) pivot relative to each other about the second pivot axis (Y).

19. A method for connecting a first (11a) and a second (11b) link of a arrangement according to claim 1,
which method comprises the step of placing the coupling pin (11a) of the first link (1a) in the head portion (2b) of the second link (1b),
**characterised by** the steps of
arranging the head portion (2) of the second link (1b) between a pair of legs (3) of the first link (1a),
subsequently introducing the coupling pin (11a) into recesses (5) in the pair of legs (3) and into recesses (9) in the head portion (2), and
finally displacing the links (1a, 1b away from each other to axially and non-rotatably fix the coupling pin (11a) in the first link (1a) and to bring the joint surfaces together to form the joint.

## Patentansprüche

1. Anordnung aus einem ersten (1a) und einem zweiten (1b) Glied, die gelenkig miteinander verbunden sind, zum Einsatz in einer Förderkette,
wobei die Glieder (1a, 1b) in Bezug zueinander um eine erste (X) und eine zweite (Y) Schwenkachse geschwenkt werden können, die sich quer zu der Anordnung erstrecken, wobei die Schwenkachsen (X, Y) senkrecht zueinander sind,
wobei das erste Glied (1a) einen Verbindungsstift (11a) trägt, der sich durch einen Kopfabschnitt (2b) des zweiten Gliedes (1b) entlang der ersten Schwenkachse (X) erstreckt,
der Verbindungsstift (11a) oder der Kopfabschnitt (2b) einen Vorsprung (12) mit einer ersten Gelenkfläche aufweist, und
das andere Element, d.h. der Verbindungsstift (11a) oder der Kopfabschnitt (2b), eine Aufnahme (10) aufweist, die an dem Vorsprung (12) gleitend mit einer zweiten Gelenkfläche anliegt, die komplementär zu der ersten Gelenkfläche ist,
wobei die Gelenkflächen um die zweite Schwenkachse (Y) herum gekrümmt sind und so ein Gelenk bilden, das die zweite Schwenkachse (Y) bestimmt,
**dadurch gekennzeichnet,**
**dass** die Gelenkflächen des Weiteren um die erste Schwenkachse (X) gekrümmt sind, so dass das Gelenk, das durch die so doppelt gekrümmten Gelenkflächen gebildet wird, auch die erste Schwenkachse (X) bestimmt, und
**dass** der Verbindungsstift (11a) in Bezug auf das erste Glied (1a) axial fixiert ist.

2. Anordnung nach Anspruch 1, **dadurch gekennzeichnet, dass** der Verbindungsstift (11a) des Weiteren nicht drehbar in Bezug auf das erste Glied (1a) fixiert ist.

3. Anordnung nach Anspruch 1 oder 2, **gekennzeichnet durch** ein Spiel (S) zwischen den Gliedern (1a, 1b), das Verschleiß verhindert und das **durch** das axiale Fixieren des Verbindungsstiftes (11a) aufrechterhalten werden kann, wenn die Glieder (1a, 1b) zueinander um die zweite Schwenkachse (Y) geschwenkt werden.

4. Anordnung nach einem der vorangehenden Ansprüche, **dadurch gekennzeichnet, dass** der Verbindungsstift (11a), der von dem ersten Glied (1a) getragen wird und sich durch den Kopfabschnitt (2b) des zweiten Gliedes (1b) hindurch erstreckt, in Bezug auf den Kopfabschnitt (2b) in einer Richtung von dem **zweiten** Glied (1b) weg an eine Position verschoben werden kann, an der die Gelenkfläche des Vorsprungs (12) und die Gelenkfläche der Aufnahme (10) in Kontakt miteinander sind, dass der Verbindungsstift (11a) axial und nicht drehbar in dem ersten Glied (1a) in der Position fixiert ist.

5. Anordnung nach Anspruch 4, **dadurch gekennzeichnet, dass** der Verbindungsstift (11a) verschoben werden kann, indem die Anordnung gedehnt wird.

6. Anordnung nach Anspruch 4 oder 5, **dadurch gekennzeichnet, dass** der Verbindungsstift (11a), um das axiale und nicht drehbare Fixieren des Verbindungsstiftes (11a) in dem ersten Glied (1a) in der Position zu ermöglichen, Nuten (14) aufweist, die sich quer zu seiner Längsrichtung erstrecken, wobei die Nuten in Aussparungen (5) eingreifen, die in dem ersten Glied (1a) hergestellt sind.

7. Anordnung nach einem der Ansprüche 4 bis 6, **dadurch gekennzeichnet, dass** der Verbindungsstift (11a) in der Position in dem ersten Gelenk (1a) in der Längsrichtung der Anordnung fixiert ist.

8. Anordnung nach einem der vorangehenden Ansprüche, **dadurch gekennzeichnet, dass** die Glieder (1a, 1b) aufeinander zu verschoben werden können, so dass das Gelenk seine Gelenkfunktion nur dann erfüllt, wenn die Anordnung gedehnt wird.

9. Anordnung nach einem der vorangehenden Ansprüche, wobei der Kopfabschnitt (2b) mit zwei Langlöchern (9) versehen ist, durch die sich der Verbindungsstift (11a) hindurch erstreckt, um die Schwenkbewegung um die zweite Schwenkachse (Y) zu ermöglichen.

10. Anordnung nach Anspruch 9, **dadurch gekennzeichnet, dass** die Langlöcher (9) Verschiebung der Glieder (1a, 1b) in Bezug zueinander ermöglichen.

11. Anordnung nach Anspruch 9 oder 10, **dadurch gekennzeichnet, dass** die Langlöcher (9) eine Höhe (H) haben, die im Wesentlichen der Dicke des Verbindungsstiftes (11a) entspricht.

12. Anordnung nach Anspruch 11, **dadurch gekennzeichnet, dass** der Vorsprung (12) an dem Verbindungsstift (11a) angeordnet ist und dass eine maximale Abmessung (L) des Verbindungsstiftes (11a), wenn der Vorsprung (12) quer zu der ersten Schwenkachse (X) ist, die Höhe (H) der Längslöcher (9) übersteigt, wobei der Verbindungsstift (11a) mit dem Vorsprung (12) über die Langlöcher (9) eingeführt werden kann, wenn der Verbindungsstift (11a) so gedreht wird, dass die maximale Abmessung (L) mit der Längsrichtung der Langlöcher (9) zusammenfällt.

13. Anordnung nach einem der vorangehenden Ansprüche, **dadurch gekennzeichnet, dass** das Gelenk einen Schwenkmittelpunkt hat, der mit der Längsachse des Verbindungsstiftes (11a) zusammenfällt.

14. Anordnung nach einem der vorangehenden Ansprüche, **dadurch gekennzeichnet, dass** der Vorsprung (12) an dem Verbindungsstift (11a) angeordnet ist und dass die Aufnahme (10) in dem Kopfabschnitt (2b) angeordnet ist.

15. Anordnung nach Anspruch 14, **dadurch gekennzeichnet, dass** der Vorsprung (12) einen Mittelpunkt hat, der mit der Längsachse des Verbindungsstiftes (11a) zusammenfällt.

16. Anordnung nach Anspruch 14 oder 15, **dadurch gekennzeichnet, dass** der Vorsprung (12) eine Einheit mit dem Verbindungsstift (11a) bildet.

17. Anordnung nach einem der Ansprüche 14-16, **dadurch gekennzeichnet, dass** die Aufnahme (10) eine Einheit mit dem Kopfabschnitt (2b) bildet.

18. Förderkette, die eine Vielzahl von Anordnungen nach Anspruch 1 umfasst,
**dadurch gekennzeichnet, dass** in jeder Anordnung
der Verbindungsstift (11a) in Bezug auf das erste Glied (1a) nicht drehbar fixiert ist, und
ein Spiel (S) zwischen den Gliedern (1a, 1b) vorhanden ist, das Verschleiß verhindert, und das durch das axiale Fixieren des Verbindungsstiftes (11a) aufrechterhalten werden kann, wenn die Glieder (1a, 1b) in Bezug zueinander um die zweite Schwenkachse (Y) geschwenkt werden.

19. Verfahren zum Verbinden eines ersten (1a) und eines zweiten (1b) Gliedes einer Anordnung nach Anspruch 1,
wobei das Verfahren den Schritt des Anordnens des Verbindungsstiftes (11a) des ersten Gliedes (1a) in dem Kopfabschnitt (2b) des zweiten Gliedes (1b) umfasst,
**gekennzeichnet durch** die Schritte des
Anordnens des Kopfabschnitts (2) des zweiten Gliedes (1b) zwischen einem Paar Schenkel (3) des ersten Gliedes (1a), anschließenden Einführens des Verbindungsstiftes (11a) in Aussparungen (5) in dem Paar Schenkel (3) und in Aussparungen (9) in dem Kopfabschnitt (2), und
abschließenden Verschiebens der Glieder (1a, 1b) voneinander weg, um den Verbindungsstift (11a) axial und nicht drehbar in dem ersten Glied (1a) zu fixieren und die Gelenkflächen zueinander zu bringen und das Gelenk herzustellen.

## Revendications

1. Agencement d'un premier maillon (1a) et d'un deuxième maillon (1b) connectés de manière articulée l'un à l'autre en vue d'être utilisés dans une chaîne de convoyeur,
lesdits maillons (1a, 1b) étant capables de pivoter en relation l'un par rapport à l'autre autour d'un premier axe de pivotement (X) et d'un deuxième axe de pivotement (Y) qui s'étendent transversalement par rapport à l'agencement, lesdits axes de pivotement (X, Y) étant mutuellement perpendiculaires,
le premier maillon (1a) supportant une tige d'accouplement (11a) qui s'étend à travers une partie de tête (2b) du deuxième maillon (1b) le long du premier axe de pivotement (X),
l'un des éléments parmi la tige d'accouplement (11a) et la partie de tête (2b) ayant une projection (12) avec une première surface de jointure ; et
l'autre élément parmi la tige d'accouplement (11a) et la partie de tête (2b) ayant un siège (10) qui vient par coulissement en butée contre la projection (12) avec une deuxième surface de joint complémentaire à la première surface de joint,
lesdites surfaces de joint sont incurvées autour du deuxième axe de pivotement (Y) et forment ainsi un joint qui définit ledit deuxième axe de pivotement (Y),
**caractérisé en ce que** les surfaces de joint sont incurvées également autour du premier axe de pivotement (X), grâce à quoi, le joint formé par les surfaces de joint à courbure double définit aussi le premier axe de pivotement (X), et
**en ce que** la tige d'accouplement (11a) est fixée axialement en relation avec le premier maillon (1a).

2. Agencement selon la revendication 1, **caractérisé en ce que** la tige d'accouplement (11a) est également fixée de manière non rotative par rapport au premier maillon (1a).

3. Agencement selon l'une ou l'autre des revendications 1 et 2, **caractérisé par** un jeu (S) entre les maillons (1a, 1b), qui prévient l'usure et qui peut être maintenu par ladite fixation axiale de la tige d'accouplement (11a) quand les maillons (1a, 1b) pivotent l'un par rapport à l'autre autour du deuxième axe de pivotement (Y).

4. Agencement selon l'une quelconque des revendications précédentes, **caractérisé en ce que** la tige d'accouplement (11a) supportée par le premier maillon (1a) et s'étendant à travers la partie de tête (2b) du deuxième maillon (1b) est déplaçable par rapport à ladite partie de tête (2b) dans une direction en éloignement du deuxième maillon (1b) jusqu'à une position dans laquelle la surface de joint de la projection (12) et la surface de joint du siège (10) sont en contact l'une avec l'autre, et **en ce que** la tige d'accouplement (11a) est fixée de manière axiale et non rotative dans le premier maillon (1a) dans cette position.

5. Agencement selon la revendication 4, **caractérisé en ce que** ladite tige d'accouplement (11a) est mobile en étirant l'agencement.

6. Agencement selon l'une ou l'autre des revendications 4 et 5, **caractérisé en ce que** la tige d'accouplement (11a) pour assurer ladite fixation axiale et non rotative de la tige d'accouplement (11a) dans le premier maillon (1a) dans ladite position, comporte des gorges (14) qui s'étendent transversalement à la direction longitudinale, lesdites gorges s'engageant dans des évidements (5) ménagés dans le premier maillon (1a).

7. Agencement selon l'une quelconque des revendications 4 à 6, **caractérisé en ce que** la tige d'accouplement (11a) est fixée au niveau du premier maillon (1a) dans la direction longitudinale de l'agencement dans ladite position.

8. Agencement selon l'une quelconque des revendications précédentes, **caractérisé en ce que** les maillons (1a, 1b) sont déplaçables les uns vers les autres, grâce à quoi le joint remplit la totalité de sa fonction de joint uniquement si l'agencement est étiré.

9. Agencement selon l'une quelconque des revendications précédentes, dans lequel la partie de tête (2b) est pourvue de deux trous allongés (9) à travers lesquels s'étend la tige d'accouplement (11a) pour permettre ledit mouvement de pivotement autour du deuxième axe de pivotement (Y).

10. Agencement selon la revendication 9, **caractérisé en ce que** les trous allongés (9) permettent le déplacement des maillons (1a, 1b) en relation l'un à l'autre.

11. Agencement selon l'une ou l'autre des revendications 9 et 10, **caractérisé en ce que** les trous allongés (9) ont une hauteur (H) qui est sensiblement égale à l'épaisseur de la tige d'accouplement (11a).

12. Agencement selon la revendication 11, **caractérisé en ce que** la projection (12) est agencée sur la tige d'accouplement (11a), et **en ce qu'**une dimension maximum (L) de la tige d'accouplement (11a) avec la projection (12) transversalement par rapport au premier axe de pivotement (X) dépasse la hauteur (H) des trous allongés (9), la tige d'accouplement (11a) avec la projection (12) pouvant être introduite à travers les trous allongés (9) si la tige d'accouplement (11a) est mise en rotation de telle façon que ladite dimension maximum (L) coïncide avec la direction longitudinale des trous allongés (9).

13. Agencement selon l'une quelconque des revendications précédentes, **caractérisé en ce que** le joint présente un centre de pivotement, qui coïncide avec l'axe longitudinal de la tige d'accouplement (11a).

14. Agencement selon l'une quelconque des revendications précédentes, **caractérisé en ce que** la projection (12) est agencée sur la tige d'accouplement (11a), et **en ce que** le siège (10) est agencé dans la partie de tête (2b).

15. Agencement selon la revendication 14, **caractérisé en ce que** la projection (12) a un centre, qui coïncide avec l'axe longitudinal de la tige d'accouplement (11a).

16. Agencement selon l'une ou l'autre des revendications 14 et 15, **caractérisé en ce que** la projection (12) est intégrale avec la tige d'accouplement (11a).

17. Agencement selon l'une quelconque des revendications 14 à 16, **caractérisé en ce que** le siège (10) est intégral avec la partie de tête (2b).

18. Chaîne de convoyeur comprenant une pluralité d'agencements selon la revendication 1,
**caractérisée en ce que** dans chaque agencement :
la tige d'accouplement (11a) est fixée sans faculté de rotation par rapport au premier maillon (1a), et
il est prévu entre les maillons (1a, 1b) un jeu (S) qui prévient l'usure et
que l'on peut maintenir par ladite fixation axiale de la tige d'accouplement (11a) lorsque les maillons (1a, 1b) pivotent l'un par rapport à l'autre autour du deuxième axe de pivotement (Y).

19. Procédé pour connecter un premier maillon (11a) et un deuxième maillon (11b) d'un agencement selon la revendication 1, ledit procédé comprenant l'opération consistant à placer la tige d'accouplement (11a) du premier maillon (1a) dans la partie de tête (2b) du deuxième maillon (1b),
**caractérisé par** les opérations consistant à :
agencer la partie de tête (2) du deuxième maillon (1b) entre une paire de pieds (3) du premier maillon (1a),
introduire ultérieurement la tige d'accouplement (11a) dans des évidements (5) dans la paire de pieds (3) et jusque dans des évidements (9) dans la partie de tête (2), et
déplacer finalement les maillons (1a, 1b) en éloignement l'un de l'autre pour fixer axialement et sans faculté de rotation la tige d'accouplement (11a) dans le premier maillon (1a), et amener les surfaces de joint ensemble pour former le joint.
